# EUROPEAN PATENT SPECIFICATION

(11) **EP 1 659 857 B1**
(45) Date of publication and mention of the grant of the patent: **09.04.2008**
(21) Application number: 04775025.2
(22) Date of filing: 11.08.2004
(51) Int. Cl.: A01K 61/00, G06M 7/00

(54) **METHOD AND DEVICE FOR RECORDING AND DETERMINING THE WEIGHT OF FISH**
VERFAHREN UND VORRICHTUNG ZUR AUFZEICHNUNG UND BESTIMMUNG DES GEWICHTS VON FISCH
PROCEDE ET DISPOSITIF D'ENREGISTREMENT ET DE DETERMINATION DU POIDS D'UN POISSON

(30) Priority: 11.08.2003 NO 20033537
(43) Date of publication of application: 31.05.2006
(73) Proprietor: Lillerud, Kristian, 6523 Frei (NO); Waagsbö, Erling, 6523 Frei (NO)
(72) Inventor: Lillerud, Kristian, 6523 Frei (NO); Waagsbö, Erling, 6523 Frei (NO)
(74) Representative: Khan, Mohammed Saiful Azam
(86) International application number: PCT/NO2004/000241
(87) International publication number: WO 2005/025309

(56) References cited:
- EP-A1- 0 984 391
- FR-A1- 2 634 573
- GB-A- 2 201 772
- US-A- 5 331 148

## Description

The present invention relates to a method as quoted in the preamble of claim 1, for the recording and estimation of the weight of fish and other aqueous organisms, and a device for carrying out this method.

### Background

A number of fish counters are known, based on optical or mechanical principles. A number of devices for weighing fish, based on mechanical or electronic principles for weighing, are also known.

Further, manufactures such as Vaki-DNG, Brodrene Wingan AS, Flatsetsund Engineering AS and Aquascan AS, have products that utilizes different analog and digital cameras, infrared sensors etc.

French patent application 2634573 (Jacob et al. 1989) discloses a method of counting fish by leading the fish through a conduit, to past a registration unit, in the form of an electronic camera, with a uniform speed and at an orientation relative to the camera, so that the surface area of each fish may be measured, and a determination of the number of fish by an average estimation may be done.

Norwegian patent specification 168151 (Kvassheim 1991) discloses a fish counter which is substantially equal to the one mentioned above.

EP patent application 984391 (Core Corp. 2000) discloses a fish counter for use in open water conduits, where the fish are recorded by a two-line camera, in such a way that it is possible, by use of image processing, to separate overlapping fish, and separate fish from other objects, to obtain a count as accurate as possible.

None of these counters have been suitable to make weight estimations of the observed fish.

It is known to guide fish through a frame, where the fish are exposed to IR-beams from two sides, and where recordings of the radiation that passes the fish, is the base for estimating the volume of the fish, in such a way, that the weight of the fish can be determined. A recording like this has poor accuracy, and does not produce any base for estimation.

Known is equipment for the counting and estimation of fish, having two CCD-sensors arranged outside a transparent pipe, with a mutual angle of 90°. In this way, the profile information, both from the side and from above the passing fish, is recorded. This profile information is then used to estimate the weight of the fish, from among other factors, the statistical data. Some known devices require, as a base, that the fish has a known speed. Furthermore, some of the devices require that only one fish passes through the conduit at a time. The estimation of the weight of the fish is inaccurate for prior art.

### Object

The main object of the invention is to improve on the prior art. It is desirable to provide more accurate profile information to obtain rapid and accurate measuring results.

Furthermore, it is an object to distinguish between different fish that are passing beside each other in a transfer conduit

Finally, it is desirable to record fish which are moving back through the transfer conduit

### The invention

The above objects are obtained by means of a method and a device for the recording and estimation of the weight of fish and other aqueous organisms, according to the enclosed independent claims 1 and 9.

The term "CCD-sensor"/"CCD-camera" is used as a description for a digital recording unit or a digital camera. The CCD-sensors are delivered as chips, having small sensor elements arranged in a matrix. Other equivalent sensor units may be used.

Advantageous embodiments appear in the dependent claims.

Using this method and device, it is possible to weigh and count fish in a transfer conduit with very high speed and high accuracy. The invention also makes it possible to record the fish when several fish pass through the recording area simultaneously.

Further details of the invention will appear from the following example.

### Example

In the following, the present invention will be described by means of an example of preferred embodiments. References are made to the enclosed drawings, wherein:
Figure 1 shows a schematic block diagram for an embodiment of a device for the counting and estimation of the weight of fish according to the invention,
Figure's 2-5 shows an illustration of an embodiment of the invention used in a transfer conduit, having a circular cross-section, with only one fish in the recording area,
Figure 6 shows an illustration of speed measuring,
Figure 7 shows another illustration of the invention, used in a transfer conduit, having a circular cross-section, with a fish present,
Figure's 8-9 shows an illustration of an embodiment according to the invention, used in a transfer conduit, having circular cross-section, with several fish present,
Figure 10 shows an illustration of an embodiment, according to the invention, used in a transfer conduit, having a rectangular cross-section, and
Figure 11 shows a schematic sideview of an embodiment of the invention, where a scanning of the contours of the fish, by means of a light line from an annular light slot, is carried out.

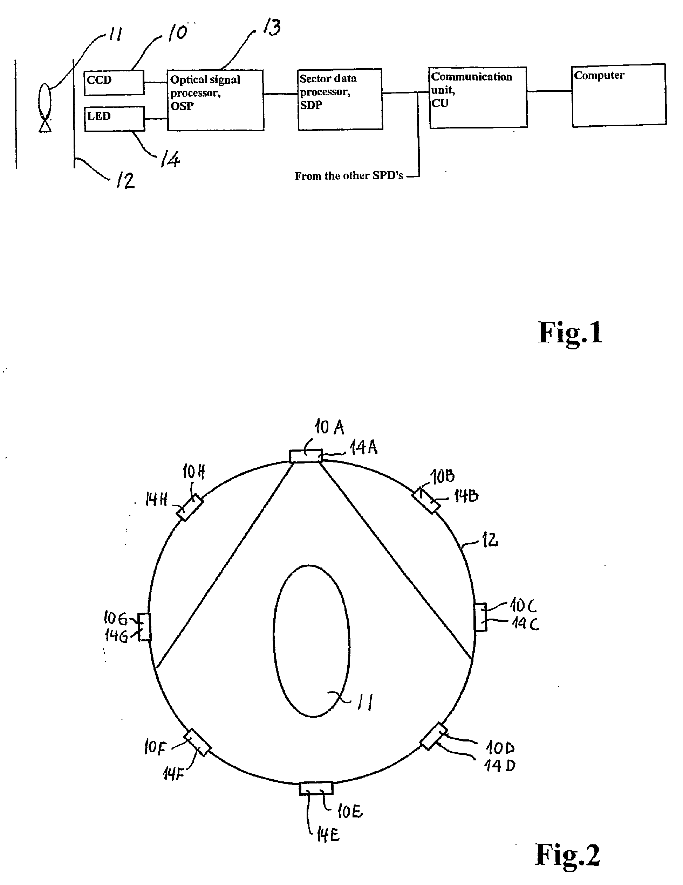

Referring first to Figure 1, which shows a block diagram of an embodiment, according to the invention. On the left side of Figure 1, an object 11, such as a fish in a transfer conduit 12 can be seen, and at the circumference of the transfer conduit 12, a camera in the form of a CCD-sensor 10 and a light source 14 are arranged. The CCD-sensor 10 and the light source 14 are connected to an optical signal processor OSP 13, which is connected to a sectorial data processor SDP. The device, according to the invention, includes a series of CCD-sensors 10 and light sources 14, in such a way that each of these are capable of recording the contents of a sector of the transfer conduit 12. All these are connected to separate OSP's and SDP's. All the SDP's are then connected to a communication unit CU which is connected to a computer.

Each CCD-sensor 10 has a recording sector that is overlapping the recording sector of the adjoining CCD-sensors (see Figure 2).

The light source 14 is preferably a continuous chain of LED's (Light Emitting Diode's) which are controlled in segments, which, in the example, covers 1/8 of the circumference.

The object of the OSP is to control the adjoining CCD-sensor 10 and light source 14, and to activate these simultaneously as it is recording information about the position and the profile of the fish.

The SDP records and processes the data from the OSP.

The CU receives data from all the SDP's for processing. The data is further transferred to the computer via a network or a USB-port etc. The computer stores the data and processes it to determine the number of fish, the volume and the speed of each fish or group of fish and the weight of each fish or group of fish.

It should be noticed that an existing setup is described. It will be obvious to a person skilled in the art to implement the OSP and the SDP in the form of software, and it is also obvious to process the data in another way. The used computer may be replaced by an interface, including, for example buttons and an LCD-display for both controlling the system and recovering data, and this will probably be favourable for smaller installations.

The Figures 2-7 illustrate the invention used on a transfer conduit 12, having a circular cross-section, such as a pipe. Eight CCD-sensors 10A, 10B,...., 10H are arranged around the circumference of the tubular transfer conduit 12, for example, behind a glass or a lens arranged in the opening of the tubular transfer conduit. Preferably, one area of the tubular transfer conduit is transparent, so that the CCD-sensors may be arranged directly on its outside. The transparent area and the CCD-sensors are surrounded by an outer housing to block light from the outside.

Together with each CCD, a light source is arranged, i.e. a segment 14A, 14B,..., 14H. The CCD-sensors 10 and the light source 14 are directed towards the centre of the tubular transfer conduit 12, to be able to record and illuminate, in an optimal way, the fish 11 in the transfer conduit 12. In this embodiment, the transfer conduit 12 is filled with water.

The simplest embodiment only records data from one individual line from each CCD-sensor, which accordingly works as one dimensional CCD-sensor. The line has a direction perpendicular to the longitudinal direction of the transfer conduit. Here, only recording of black/white and different gray tones are used, but colours may also be used.

The method for the recording and estimation of the weight of fish 11, will now be described. Figure 2 shows the sector inside, in which the CCD-sensor 10A is capable of making recordings, as mentioned above. As one fish comes into the transfer conduit 12, The sequential measurements are made.

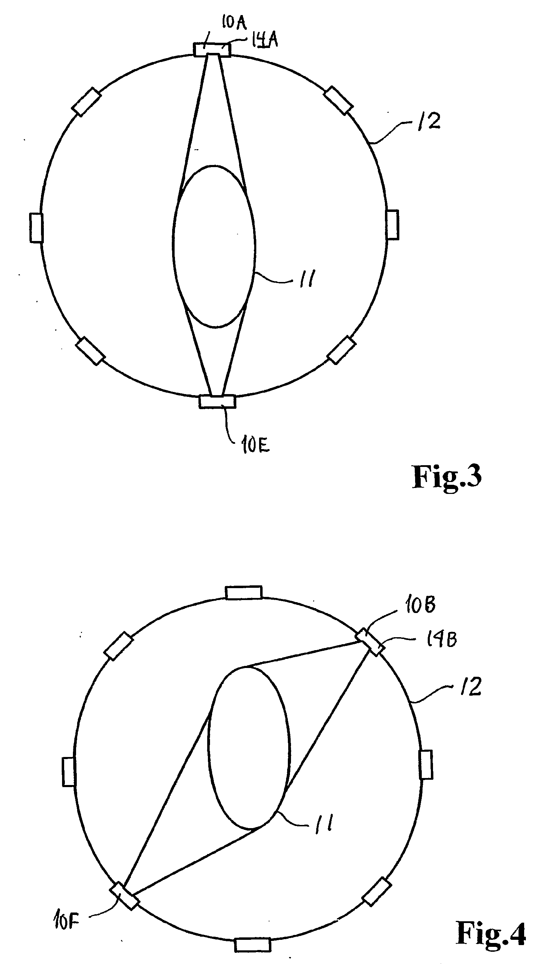

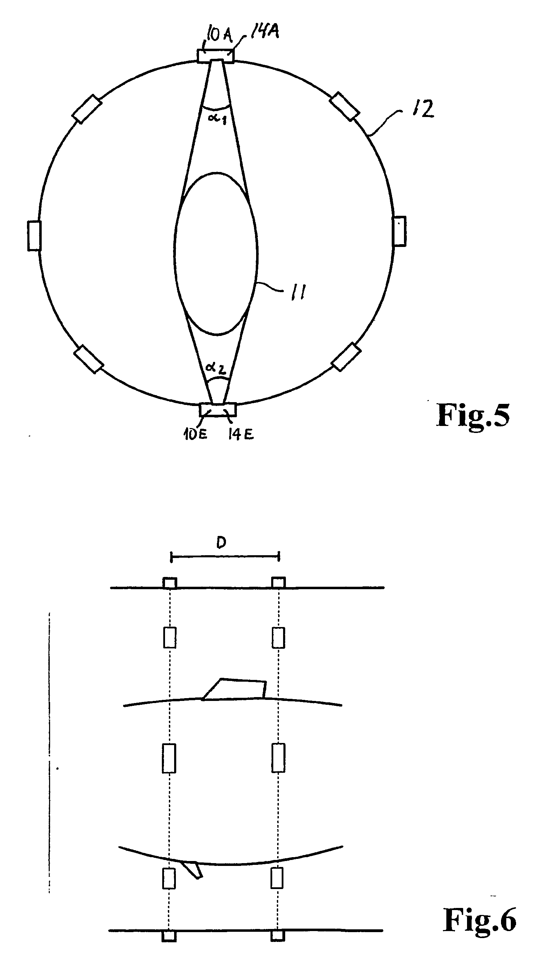

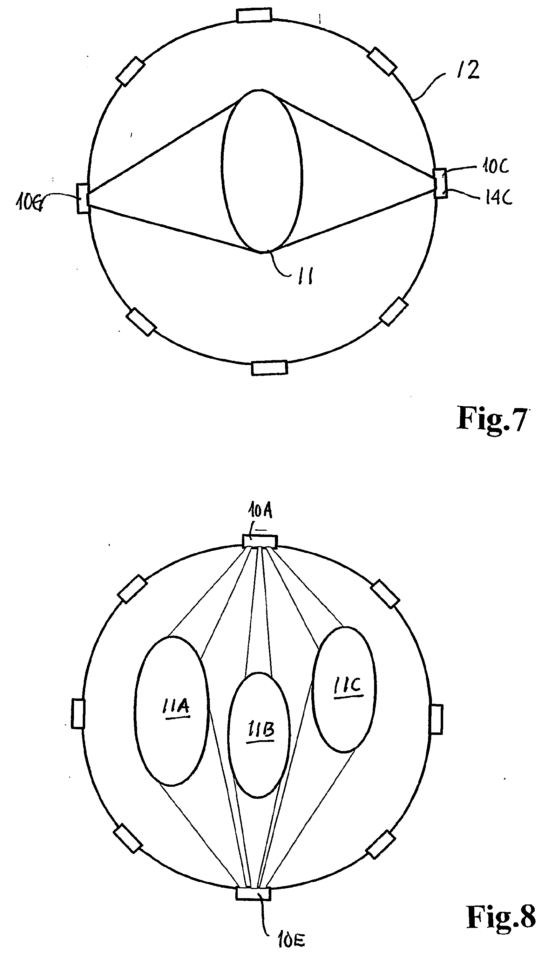

The sequence is as follows: The light source 14A starts to light for a short period, while the oppositely arranged CCD-sensors 10A and 10E makes a data recording before the light source 14A turns off (Figure 3). Then the light source 14B starts and lights for a short period, while the oppositely arranged CCD-sensors 10B and 10F makes a data recording before the light source 14B turns off (Figure 4). The data recording continues in this way, sequentially around the circumference of the tubular transfer conduit 12. In Figure 5, the light source 14E lights, while the CCD-sensor l0A and 10E records data. In Figure 7, the light source 14C lights, while the CCD-sensors 10C and 10G records data.

A fish 11 is pumped or swims through the tubular transfer conduit 12, and the CCD-sensors will accordingly record different gray tones. The CCD-sensors, on the same side as the lighted light source, will record reflected light from the fish over a certain area, while the CCD-sensor across the lighted source will record the light that passes the fish, i.e. the shade area created by the fish.

From the recorded data from the two CCD-sensors, for each illumination from the light source, angles α₁ and α₂ (shown in Figure 5) are estimated. The two angles indicates the angle between a first margin between the fish and the water, and a second margin between the fish and the water, for each of the two CCD-sensors. The two angles are used to indicate the position of the fish in the conduit. If the angles are equal, it indicates that the fish is central in the conduit, and if the second angle is much greater then the first one, the fish is nearer to the other CCD-sensor. Figure 5 shows that α₂ is somewhat bigger than α₁, and that the fish is closer to the CCD-sensor 10E.

When all the light sources 14A - 14H have been activated once, and each CCD-sensor 10A - 10H has made two recordings of angles, the microprocessor has sufficient data to estimate thirty-two points on the fish profile, in the conduit cross-section of interest. The line between these points may be interpolated to find a more accurate outer profile.

To be able to estimate the weight of the fish, the speed of the fish must also be estimated in such a way that the correct number of measured cross-sections are added. Thus, there may be arranged two sets like this, having eight CCD-sensors and adjoining lights sources in a distance D in the longitudinal direction of the conduit. This is disclosed in Figure 6. These are preferably arranged relatively close, for example with a distance 10-20 cm.

Then the area is estimated for each section profile. By means of this area, together with the speed and the sample rate, a part volume can be estimated. In the end, the part volumes are summed up to provide a total volume for the fish.

The speed can be measured by using several lines with measuring points at the CCD-sensors. The speed is determined by measuring the transit-time, i.e. the time the fish takes to pass between two CCD-sensors of distance D. If there are several fish in the transfer conduit and their speed is different, the speed is estimated by correlating the measured data.

In a modified embodiment, the fish is illuminated by a light source, for example 14A, and the reflection is recorded by the adjoining CCD-sensor 10A, and also by the closest CCD-sensor 10B and 10H on each side. By rotating this illumination-shadow recording, cyclically around the fish, an expanded recording of the shade dimension of the fish, which makes the base for a more accurate estimation of the volume and thereof the weight, can be obtained. By an alternative embodiment, the shadow is recorded by more than one opposite CCD-sensor, for example, by a directly opposite CCD-sensor 10E and a CCD-sensor on each side of this, 10D and 10F.

The device, according to the invention, may also be used for the counting and estimation of the weight of several fish simultaneously in the same transfer conduit. This is shown in Figure's 8-9. The measurements here are made in the same way as in the description above. Figure 8 shows three fish 11A, 11B, and 11C simultaneously in the transfer conduit 12. Here, there are relatively large distances between the fish, and for the CCD-sensors 10A and 10E, now two different angles or angle sectors are measured for each of the fish. This provides information about the position of each of the fish in the transfer conduit. The following measurements from the other CCD-sensors will contribute to information, in such a way that an approximated profile may be estimated in a similar manner as above.

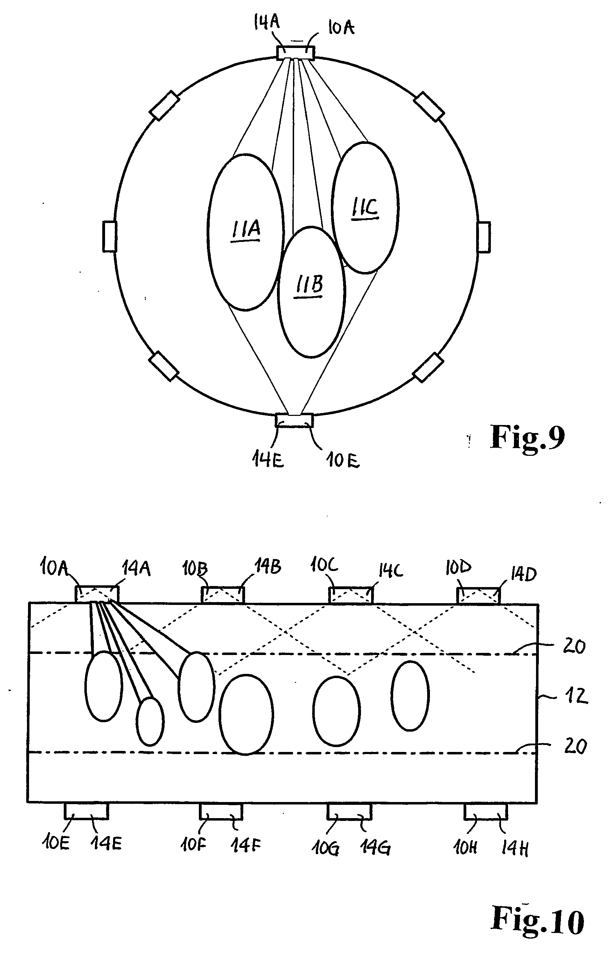

Figure 9 also has three fish 11A-C simultaneously in the transfer conduit 12, but in this case, there are relatively short distances between the fish. During illumination from the light source 14A, the CCD-sensor 10A will be able to measure the correct number of fish on the basis of the reflection, while the CCD-sensor 10E will be able to see the shadows of these three fish. However, the CCD-sensor 10A will measure the correct number of fish when the light source 14A is illuminated. If the picture information is measured very quickly, the fish will have moved a relatively short distance in this time period, and sufficient information will be provided by the pictures.

Figure 10 shows a second embodiment according to the invention, which is particularly suitable for treatment of large amounts of small fish. The transfer conduit 12 has, in this case, a rectangular cross-section. Eight CCD-sensors 10A, 10B,..., 10H with adjoining light sources 14A, 14B,...., 14C, are arranged at the upper side and at the lower side of the transfer conduit 12, to record and count the passing fish. By normal use, the light sources 14A-D in the upper edge will be turned on alternately with the light sources 14E-H in the lower edge, while the CCD-sensors 10A-H records the data in a similar way as described above.

The device, according to the invention, may include means for guiding the fish in a favourable way into the transfer conduit 12. This will mainly happen by preventing more than a certain number of fish to pass simultaneously, and to centre the fish in such a way that they does not get too close to the CCD-sensors. In the illustrated embodiment, there are arranged means in the form of an upper and a lower flap 20, 21, indicated with dotted lines. The flaps 20, 21, which are letting water through, can be adjusted in height according to the size of the fish, in such a way that two fish cannot pass above each other.

It is also possible to activate some light sources and a limited selection of cameras. This may be of interest in a situation with a particular concentration of fish in one area. The recoupling between a full light source- and camera activation, and selective activation, is controlled with an algorithm in the control system.

The invention is not limited to eight CCD-sensors and eight light sources, but this may be varied according to the requested accuracy and the size of the transfer conduit.

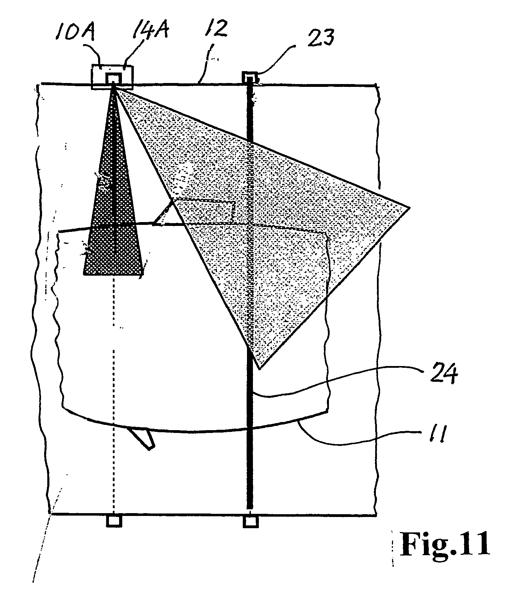

Figure 11 shows a transfer conduit 12 with, as described above, a radially beaming segment-shaped light source 14A, and a CCD-sensor 10A at the upper edge. In addition there is, arranged upstream, in relation to the light source 14A, an annular light slot 23 around the transfer conduit 12. The light slot 23 will at the reflection, mark an illuminated line 24 around a passing fish 11. A part of the illuminated line 24 will be visible from the CCD-sensor 10A, which is controlled to intercept or read with the parts which are facing in an angle towards the area for the illuminated line 24. Due to the angle for the CCD-sensors reading, the line 24 will appear as an arc which reproduces a part of the contour of the fish. From the information of the reading angle, and the cyclic rotating scanning which covers the whole circumference of the fish, a complete and correct contour of the fish may be determined by use of a computer.

To disclose the topography of the fish, different closing periods and/or different luminous intensity for the camera and the illumination may be used.

## Claims

1. A method for the recording and estimation of the weight of fish (11) and other aqueous organisms, with at least two cameras, particularly CCD-cameras (10), which records pictures in different directions of fish (11) passing the camera (10) in a transfer conduit (12), as the fish (11) is illuminated from at least two light sources (14), and where the signals of the camera (10) are processed in a computer, to estimate a value for the volume of each fish, for creating a value for the weight of the fish (11), **characterised in that** both the light sources (14) and the cameras (10) are distributed around the circumference of the transfer conduit (12), and that reflected light and/or shadow pictures from generally opposite sides of the fish (11) are recorded, creating a compound image recording of the transverse dimensions of the fish (11) in several positions over its length and around its circumference, which are used as a base for the estimation of the weight of the fish (11).

2. A method according to claim 1, wherein there is provided an illumination and a recording of reflection and/or shadow area across the transfer conduit (12), by said camera (10) being arranged at the light source (14) and/or diametrically opposite.

3. A method according to claim 2, wherein the illumination and the recording are made cyclically around the fish (11).

4. A method according to claim 3, wherein the sector recordings from different directions are used to estimate the cross- sectional area of the fish (11).

5. A method according to claim 4, wherein recordings are made in two cross planes, with a mutual distance in the direction of movement of the fish (11).

6. A method according to claim 3, wherein the reflection from the fish (11) is recorded by two further cameras (10) which are arranged symmetrically on each side of the light source (14), as the scanning is rotated cyclically.

7. A method according to claim 1, wherein the fish (11) is illuminated around the circumference with a light line (24), as this light line is recorded by means of a series of cameras (10), arranged around the transfer conduit (12).

8. A method according to claim 7, **characterized in that** the cameras (10) are slanted and directed towards the plane for the light line (24), to read the arced reflection lines on the fish (11), as a base for the contour reading.

9. A device for processing measurements on fish (11) or other aqueous organisms moving in a transfer conduit (12), at least two cameras, especially CCD-cameras (10), being arranged at the wall of the transfer conduit (12), to record pictures of the fish (11), with at least two light sources (14), **characterised in that** the at two light sources (14) are evenly arranged around the circumference of the transfer conduit (12) and the at least two cameras (10) are arranged in the same cross plane and are evenly arranged around the circumference, and wherein the light sources (14) and the cameras (10) are connected with a control circuit, provided to activate the light sources (14) and the camera (10).

10. A device according to claim 9, wherein the control circuit is provided to activate at least one light source (14) and at least one camera (10) at a time, in a revolving sequence.

11. A device according to claim 10, wherein the control circuit is provided to activate one light source (14), one CCD-camera at the light source, and one CCD-camera (10) on each side of the light source (14) and preferably a diagonally opposite CCD-camera (10), for each recording sequence, and to move the activation by one unit for each step, to have a spiral scanning of the fish in motion.

12. A device according to claim 8, wherein it comprises an annular light source (22) which surrounds the transfer conduit (12) and marks a narrow light line (24), on the outside of a passing fish (11).

13. A device according to claim 12, wherein lasers, having lenses creating light lines, are used as light sources (14).

14. A device according to any one of claims 12 or 13, wherein cameras are slanted and directed towards the plane of the light slot (23), to record the light lines three-dimensionally.

15. A device according to claim 14, wherein the control circuit is provided to assemble the scanning results to provide a three-dimensional picture of the fish, as a base for the volume- and weight estimations.

16. A device according to any one of claims 9-13, wherein it comprises multiple cameras (10) with adjoining light sources (14), arranged around the circumference of a transfer conduit (12), to be able to illuminate and record one or several fishes pass through the transfer conduit (12), where each camera (10) and light source (14) is connected to an optical signal processor(OSP) and further to a sectorial data processor (SDP), and all the sectorial data processors are connected to a communication unit (CU) and further to a computer for estimation of the measured data.

## Patentansprüche

1. Verfahren zum Aufzeichnen und Abschätzen des Gewichts von Fischen (11) und anderen Wasserorganismen, mit mindestens zwei Kameras, insbesondere CCD-Kameras (10), die Bilder in verschiedenen Richtungen eines die Kamera (10) passierenden Fisches (11) in einer Transferleitung (12) aufzeichnet, wenn der Fisch (11) von mindestens zwei Lichtquellen (14) beleuchtet wird, und wobei die Signale der Kamera (10) in einem Computer verarbeitet werden, um einen Wert des Volumens jedes Fischs abzuschätzen, um einen Wert des Gewichts des Fischs (11) zu erzeugen, **dadurch gekennzeichnet, dass** beide Lichtquellen (14) und die Kameras (10) um den Umfang der Transferleitung (12) herum verteilt sind, und dass reflektiertes Licht und/oder Schattenbilder von allgemein gegenüberliegenden Seiten des Fischs (11) aufgezeichnet werden, wodurch ein Gesamtbild erzeugt wird, das die Querdimensionen des Fischs (11) in mehreren Positionen über seiner Länge und um seinen Umfang herum aufzeichnet, die als Basis für die Gewichtsabschätzung des Fischs (11) verwendet werden.

2. Verfahren nach Anspruch 1, wobei eine Beleuchtung und eine Aufzeichnung der Reflexions- und/oder Schattenfläche über der Transferleitung (12) durch die Kamera (10), die an der Lichtquelle (14) und/oder diametral gegenüber angeordnet ist, vorgesehen ist.

3. Verfahren nach Anspruch 2, wobei die Beleuchtung und die Aufzeichnung zyklisch um den Fisch (11) herum erfolgen.

4. Verfahren nach Anspruch 3, wobei die Sektoraufzeichnungen aus verschiedenen Richtungen dazu verwendet werden, die Querschnittsfläche des Fischs (11) abzu schätzen.

5. Verfahren nach Anspruch 4, wobei Aufzeichnungen in zwei Querebenen vorgenommen werden, mit einem gegenseitigen Abstand in der Bewegungsrichtung des Fischs (11).

6. Verfahren nach Anspruch 3, wobei die Reflexion von dem Fisch (11) durch zwei weitere Kameras (10) aufgezeichnet wird, die symmetrisch an jeder Seite der Lichtquelle (14) angeordnet sind, wenn das Scannen zyklisch gedreht wird.

7. Verfahren nach Anspruch 1, wobei der Fisch (11) um den Umfang mit einer Lichtzeile (24) beleuchtet wird, während diese Lichtzeile mittels einer Reihe von Kameras (10), die um die Transferleitung (12) herum angeordnet sind, aufgezeichnet wird.

8. Verfahren nach Anspruch 7, **dadurch gekennzeichnet, dass** die Kameras (10) geneigt sind und zu der Ebene für die Lichtzeile (24) ausgerichtet sind, um die gebogenen Reflexionslinien auf dem Fisch(11) als Basis für das Konturlesen zu lesen.

9. Vorrichtung zum Verarbeiten von Messungen an Fischen (11) oder anderen Wasserorganismen, die sich in einer Transferleitung (12) bewegen, wobei mindestens zwei Kameras, insbesondere CCD-Kameras (10), an der Wand der Transferleitung (12) angeordnet sind, um Bilder des Fischs (11) mit mindestens zwei Lichtquellen (14) aufzuzeichnen, **dadurch gekennzeichnet, dass** die zwei Lichtquellen (14) gleichmäßig um den Umfang der Transferleitung (12) herum angeordnet sind, und die mindestens zwei Kameras (10) in der gleichen Querebene und gleichmäßig um den Umfang angeordnet sind, und wobei die Lichtquellen (14) und die Kameras (10) mit einer Steuerschaltung verbunden sind, die vorgesehen ist, um die Lichtquellen (14) und die Kamera (10) zu aktivieren.

10. Vorrichtung nach Anspruch 9, wobei die Steuerschaltung vorgesehen ist, um mindestens eine Lichtquelle (14) und mindestens eine Kamera (10) gleichzeitig in einer Drehsequenz zu aktivieren.

11. Vorrichtung nach Anspruch 10, wobei die Steuerschaltung vorgesehen ist, um eine Lichtquelle (14), eine CCD-Kamera an der Lichtquelle und eine CCD-Kamera (10) auf jeder Seite der Lichtquelle (14) und vorzugsweise eine diagonal gegenüberliegende CCD-Kamera (10) für jede Aufzeichnungssequenz zu aktivieren, und die Aktivierung für jeden Schritt um eine Einheit weiterzubewegen, um eine spiralartige Abtastung des in Bewegung befindlichen Fischs vorzunehmen.

12. Vorrichtung nach Anspruch 8, wobei sie eine ringförmige Lichtquelle (22) aufweist, welche die Transferleitung (12) umgibt und eine schmale Lichtzeile (24) an der Außenseite eines pasierenden Fischs (11) markiert.

13. Vorrichtung nach Anspruch 12, wobei Laser mit Linsen, die Lichtzeilen erzeugen, als Lichtquellen (14) verwendet werden.

14. Vorrichtung nach einem der Ansprüche 12 oder 13, wobei die Kameras geneigt und zu der Ebene des Lichtschlitzes (23) hin gerichtet sind, um die Lichtzeilen dreidimensional aufzuzeichnen.

15. Vorrichtung nach Anspruch 14, wobei die Steuerschaltung vorgesehen ist, um die Abtastergebnisse zusammenzustellen, um ein dreidimensionales Bild des Fischs als Basis für die Volumen- und Gewichtsabschätzungen bereitzustellen.

16. Vorrichtung nach einem der Ansprüche 9 bis 13, wobei sie mehrere Kameras (10) mit angrenzenden Lichtquellen (14) umfasst, die um den Umfang einer Transferleitung (12) herum angeordnet sind, um einen oder mehrere Fisch(e), die durch die Transferleitung (12) schwimmen, zu beleuchten und aufzuzeichnen, wobei jede Kamera (10) und Lichtquelle (14) mit einem optischen Signalprozessor (OSP) und ferner mit einem sektoriellen Datenprozessor ("sectorial data processor" - SDP) verbunden ist, und alle sektoriellen Datenprozessoren mit einer Kommunikationseinheit (CU) und außerdem mit einem Computer zur Abschätzung der Messdaten verbunden sind.

## Revendications

1. Procédé d'enregistrement et de détermination du poids d'un poisson (11) et autres organismes aquatiques, avec au moins deux caméras, en particulier des caméras à dispositif à transfert de charge (10), qui enregistre des images dans différentes directions d'un poisson (11) passant devant la caméra (10) à l'intérieur d'une conduite de transfert (12), au moment où le poisson (11) est illuminé à partir de au moins deux sources de lumière (14), et dans lequel les signaux de la caméra (10) sont traités dans un ordinateur, afin de déterminer une valeur pour le volume de chaque poisson (11), de façon à créer une valeur pour le poids du poisson (11), **caractérisé en ce que** à la fois les sources de lumière (14) et les caméras (10) sont réparties autour de la circonférence de la conduite de transfert (12), et **en ce qu'**une lumière et/ou des images fantômes réfléchies depuis des côtés généralement opposés du poisson (11) sont enregistrées, créant ainsi un enregistrement d'images composées des dimensions transversales du poisson (11) en plusieurs endroits sur sa longueur et autour de sa circonférence, qui sont utilisées pour servir de base à la détermination du poids du poisson (11).

2. Procédé selon la revendication 1, dans lequel il est réalisé une illumination et un enregistrement d'une réflexion et/ou d'une zone fantôme au travers de la conduite de transfert (12), par ladite caméra (10) qui est arrangée au niveau de la source de lumière (14) et/ou diamétralement à l'opposé.

3. Procédé selon la revendication 2, dans lequel l'illumination et l'enregistrement sont accomplis cycliquement autour du poisson (11).

4. Procédé selon la revendication 3, dans lequel les enregistrements sectoriels à partir de différentes directions sont utilisés afin d'estimer la zone en section transversale du poisson (11).

5. Procédé selon la revendication 4, dans lequel des enregistrements sont pris sur deux plans transversaux, avec une distance mutuelle dans le sens du déplacement du poisson (11).

6. Procédé selon la revendication 3, dans lequel la réflexion à partir du poisson (11) est enregistrée par deux autres caméras (10) supplémentaires qui sont arrangées symétriquement de chaque côté de la source de lumière (14), à mesure que le balayage se fait en rotation cyclique.

7. Procédé selon la revendication 1, dans lequel le poisson (11) est illuminé autour de sa circonférence avec une ligne de lumière (24), à mesure que cette ligne de lumière est enregistrée au moyen d'une série de caméras (10) arrangées autour de la conduite de transfert (12).

8. Procédé selon la revendication 7, **caractérisé en ce que** les caméras (10) sont inclinées et dirigées vers le plan de la ligne de lumière (24), de façon à lire les lignes de réflexion en arc sur le poisson (11), en tant qu'une base pour la lecture du contour.

9. Dispositif de traitement de mesures sur un poisson (11) ou d'autres organismes aquatiques qui se déplacent à l'intérieur d'une conduite de transfert (12), au moins deux caméras, en particulier des caméras à dispositif à transfert de charge (10), étant arrangées au niveau de la paroi de la conduite de transfert (12), dans le but d'enregistrer des images du poisson (11), avec au moins deux sources de lumière (14), **caractérisé en ce que** les au moins deux sources sont arrangées à égale distance autour de la circonférence de la conduite de transfert (12) et **en ce que** les au moins deux caméras (10) sont arrangées sur le même plan transversal et sont arrangées à égale distance autour de la circonférence, et dans lequel la source de lumière (14) et les caméras (10) sont reliées à un circuit de commande prévu pour activer la source de lumière (14) et la caméra (10).

10. Dispositif selon la revendication 9, dans lequel le circuit de commande est prévu pour activer au moins une source de lumière (14) et au moins une caméra (10) à la fois, selon une séquence à répétition cyclique.

11. Dispositif selon la revendication 10, dans lequel le circuit de commande est prévu pour activer une source de lumière (14), une caméra à dispositif à transfert de charge au niveau de la source de lumière, et une caméra à dispositif à transfert de charge (10) de chaque côté de la source de lumière (14) et, de préférence, une caméra à dispositif à transfert de charge (10) diagonalement à l'opposé, pour chaque séquence d'enregistrement, et pour déplacer l'activation d'une unité pour chaque étape, de façon à réaliser un balayage en spirale du poisson en mouvement.

12. Dispositif selon la revendication 8, dans lequel il comprend une source de lumière annulaire (22) qui entoure la conduite de transfert (12) et qui marque une ligne de lumière étroite (24) sur l'extérieur d'un poisson (11) passant à proximité.

13. Dispositif selon la revendication 12, dans lequel des lasers, comprenant des lentilles qui créent des lignes de lumière, sont utilisés en tant que les sources de lumière (14).

14. Dispositif selon l'une quelconque des revendications 12 ou 13, dans lequel les caméras sont inclinées et dirigées vers le plan de la fente de lumière (23), de façon à enregistrer les lignes de lumière en trois dimensions.

15. Dispositif selon la revendication 14, dans lequel le circuit de commande est prévu pour assembler les résultats du balayage de façon à produire une image en trois dimensions du poisson, en tant qu'une base pour les déterminations du volume et du poids.

16. Dispositif selon l'une quelconque des revendications 9 à 13, dans lequel il comprend une pluralité de caméras (10) avec des sources de lumière (14) adjacentes, arrangées autour de la circonférence d'une conduite de transfert (12), de façon à être aptes à illuminer et à enregistrer un ou plusieurs poissons passant au travers de la conduite de transfert (12), dans lequel chaque caméra (10) et chaque source de lumière (14) est connectée à un processeur de signaux optiques (OSP) et également à un processeur de données sectorielles (SDP), et tous les processeurs de données sectorielles sont connectés à une unité de transmission (CU) et également à un ordinateur pour une détermination des données mesurées.
